# EUROPÄISCHE PATENTSCHRIFT

(11) **EP 2 617 123 B1**
(45) Veröffentlichungstag und Bekanntmachung des Hinweises auf die Patenterteilung: **17.10.2018**
(21) Anmeldenummer: 11752105.4
(22) Anmeldetag: 15.08.2011
(51) Int. Cl.: H02K 7/102

(54) **ELEKTROMOTOR**
ELECTRIC MOTOR
MOTEUR ÉLECTRIQUE

(30) Priorität: 15.09.2010 DE 102010045447
(43) Veröffentlichungstag der Anmeldung: 24.07.2013
(73) Patentinhaber: Sew-Eurodrive GmbH & Co. KG, 76646 Bruchsal (DE)
(72) Erfinder: STAMMBERGER, Marc, 75438 Knittlingen (DE); MASUCH, Volker, 75038 Oberderdingen (DE)
(74) Vertreter: Tüngler, Eberhard
(86) Internationale Anmeldenummer: PCT/EP2011/004088
(87) Internationale Veröffentlichungsnummer: WO 2012/034624

(56) Entgegenhaltungen:
- EP-A2- 0 421 051
- EP-A2- 2 107 669
- DE-C1- 19 746 027
- JP-A- 56 012 830

## Beschreibung

Die Erfindung betrifft einen Elektromotor.

Es ist bekannt, Elektromotoren mit einer elektromagnetisch betätigbaren Bremse zu verbinden.

Aus der EP 1 011 188 B1 ist ein Elektromotor mit integrierter Bremse bekannt.

Aus der EP 1 502 792 B1 ist ein Antriebe mit Elektromotor und Bremse bekannt.

Aus der EP 0 423 361 A1 ist eine Einbaubremse für einen Elektromotor bekannt.

**Aus der** EP 2 107 669 A2 **ist ein Motor mit einer elektromagnetischen Bremse bekannt.**

**Aus der** JP 56 012830 A **ist ebenfalls ein Elektromotor mit Bremse bekannt.**

**Aus der** EP 0 421 051 A2 **ist eine Ruhestrombremse mit Verschleißüberwachung bekannt.**

**Aus der** DE 197 46 027 C1 **ist eine elektromagnetisch betätigbare mechanische Bremse für einen Elektromotor bekannt.**

Der Erfindung liegt daher die Aufgabe zugrunde, einen Elektromotor weiterzubilden, wobei der Motor einfach herstellbar sein soll.

Erfindungsgemäß wird die Aufgabe bei dem Elektromotor nach den in Anspruch 1 angegebenen Merkmalen gelöst.

Weitere Ausgestaltungsformen der Erfindung sind Gegenstand der abhängigen Ansprüche 2-8.

Wichtige Merkmale der Erfindung bei dem Elektromotor, aufweisend eine Rotorwelle, eine elektromagnetisch betätigbare Bremse und ein Gehäuse, sind, dass die Bremse eine Bremsspule mit Spulenkörper aufweist,
wobei die Rotorwelle über zumindest ein Lager, das als Loslager, als angestelltes Lager oder als Festlager, ausgeführt ist, gelagert ist,
wobei das Lager an einem im Spulenkörper angeordneten Lagersitz aufgenommen ist,
wobei der Außenring des Lagers im Spulenkörper radial festgelegt ist, und der Spulenkörper mit dem Gehäuse verbunden ist, insbesondere an dessen Innenseite, wobei der Spulenkörper mit dem Gehäuse schraubverbunden ist.

Eine zweite Lagerstelle der Rotorwelle ist dabei an der gegenüberliegenden Seite des Motors an dessen Gehäuse angebunden.

Von Vorteil ist dabei, dass die Rotorwelle über ein Lager im Spulenkörper gelagert ist. Dabei ist das Lager als Loslager ausführbar, wobei der Außenring axial verschiebbar im Spulenkörper angeordnet, insbesondere radial begrenzt, ist. Bei Ausführung des Lagers als Festlager ist der Außenring im Spulenring axial und radial begrenzt. Hierzu ist vorteiligerweise ein Absatz im Spulenkörper anbringbar und ein Sicherungsring, wobei der Außenring des Lagers axial zwischen dem Absatz und dem Sicherungsring angeordnet ist. Über den Spulenkörper wird also die Wärme des Lagers abgeführt. Außerdem wird über den Spulenkörper die Wärme der in ihm vorgesehenen Bremsspule abgeführt. Darüber hinaus wird Bremswärme der zum Spulenkörper hin angeordneten Bremsfläche über den Spulenkörper abgeführt. Der Spulenkörper ist großflächig mit dem Gehäuse des Motors verbunden und somit wird die Wärme vom Spulenkörper an das Gehäuse und von dort an die Umgebung abgeführt. Durch die Ausführung des Spulenkörpers aus gut wärmeleitendendem Material, insbesondere Stahl oder Qualitätsstahl, ist eine besonders effektive Entwärmung erreichbar. Durch zusätzliches Anbringen einer Wärmeleitpaste kann die Wärmeleitung an den Kontaktflächen noch gesteigert werden.

Lagersitz und Bremsfläche sind dabei weitestmöglich voneinander entfernt und somit sind die im Spulenkörper auftretenden Spitzentemperaturen im Spulenkörper reduziert.

Bei einer vorteilhaften Ausgestaltung ist der Spulenkörper aus einem ferromagnetischen Material gefertigt, wobei durch einem Materialumformprozess die Homogenität des Materials und somit die elektromagnetischen Eigenschaften zum Vorteil verbessert werden können. Von Vorteil ist dabei, dass ein starkes Magnetfeld erzeugbar ist und somit ein schnelles Bewegen der Ankerscheibe, also auch ein schnelles Lüften der Bremse, ermöglicht ist.

Bei einer vorteilhaften Ausgestaltung ist der Spulenkörper aus einem Stahl, insbesondere aus einem niedrig legierten Qualitätsstahl, insbesondere aus C10 oder C15, gefertigt,

insbesondere mit einem Anteil von weniger als 4% Silizium, insbesondere weniger als 0,6 % Silizium,
und/oder mit einem Kohlenstoffanteil von weniger als 0,5%, insbesondere weniger als 0,15 %. Von Vorteil ist dabei, dass eine hohe Permeabilität und niedrige Remanenz erreichbar ist. Somit sind die Verluste auch bei häufig wiederholtem Betätigen der Bremse gering und ein Lüften der Bremse ist stets schnellstmöglich ausführbar. Außerdem sind somit die abzuleitenden Wärmeströme gering gehalten.

Erfindungsgemäss ist die Bremsspule einer Ausnehmung des Spulenkörpers vergossen vorgesehen. Von Vorteil ist dabei, dass das Magnetfeld fast vollständig im Spulenkern führbar ist, also im Magnetkörper. Außerdem ist die Wärme schnell und direkt, also ohne weiteren Wärmeübergänge, abführbar durch den Spulenkörper an das Gehäuse.

Bei einer vorteilhaften Ausgestaltung ist die Bremsspule axial zwischen dem Lager und einer Ankerfläche angeordnet, insbesondere weist der Spulenkörper eine Ankerfläche auf. Von Vorteil ist dabei, dass die beiden Wärmeströme an axial möglichst weit voneinander entfernt gelegenen Bereichen in den Spulenkörper eingeleitet werden.

Erfindungsgemäss weist die Bremse einen mit der Rotorwelle axial verschiebbaren, aber in Umfangsrichtung formschlüssig verbundenen Reibbelagträger auf, der von einer mit dem Gehäuse oder Spulenkörper drehfest verbundenen, axial verschiebbar angeordneten Ankerscheibe, insbesondere aus Stahl, gegen die Bremsfläche andrückbar ist mittels einer von Federelementen erzeugten Federkraft,

insbesondere nach Abschalten des Stromes in der Bremsspulenwicklung und somit Reduzieren beziehungsweise Versiegens der von der Bremsspule erzeugten, gegen die Federkraft wirkenden magnetischen Kraft. Von Vorteil ist dabei, dass die Bremse elektromagnetisch betätigbar ist. Wenn also der Elektromagnet bestromt wird, wird die Federkraft der Federelemente überwindbar und die Ankerscheibe somit zum Elektromagnet in axialer Richtung geführt, wobei sie drehfest mit dem Spulenkörper und dem Gehäuse verbunden ist. Bei Nichtbestromen der Bremsspule fällt die Bremse ein, also wird die Ankerscheibe von den Federelementen auf den Reibbelagträger gedrückt, der somit auf ein auf seiner von der Ankerscheibe abgewandten Seite angeordnetes Bremsschild gedrückt wird. Der Reibbelagträger ist drehfest, aber axial verschieblich mit der Rotorwelle verbunden.

Erfindungsgemäss sind Federelemente in Ausnehmungen des Spulenkörpers angeordnet, wobei die Federelemente auf gleichem Radialabstand angeordnet sind und in Umfangsrichtung voneinander beabstandet sind, insbesondere regelmäßig. Die Druckfedern sind in Ausnehmungen, insbesondere SacklochBohrungen, des Spulenkörpers angeordnet. Von Vorteil ist dabei, dass ein möglichst gleichmäßiges Andrücken in axialer Richtung erreichbar ist und somit ein Kippmoment verhinderbar ist.

Bei einer vorteilhaften Ausgestaltung ist bei Ausführung des Lagers als Festlager
- der Außenring des Lagers an einem Absatz des Spulenkörpers und/oder an einem Sicherungsring oder an einem mit dem Spulenkörper verbundenen Flanschteil axial begrenzt und/oder 11
- der Innenring des Lagers an seiner ersten axialen Seite an einem Absatz der Welle axial festgelegt und an seiner anderen axialen Seite mittels eines auf der Welle befestigten Sicherungsrings festgelegt.

Von Vorteil ist dabei, dass ein Sensor im Bereich des Lagers an der Welle anordenbar ist, wobei Geber und zugehöriger Sensoranordnung axial beabstandet sind. Somit ist durch das Festlager der axiale Abstand auch bei thermischen Änderungen möglichst konstant haltbar. Die Sensoranordnung arbeitet also stabil. Bei einer vorteilhaften Ausgestaltung ist bei Ausführung des Lagers als Loslager
- der Außenring des Lagers verschiebbar und über ein Federelement vorgespannt
- der Innenring des Lagers auf der Welle fest, also unverschiebbar, angeordnet.Von Vorteil ist dabei, dass auch ein Loslager im Spulenkörper anordenbar ist und somit bei thermisch bedingten Längenänderungen der Rotorwelle diese ausgleichbar ist und eine optimale Wälzbewegung der Lagerelemente ermöglicht wird.

Erfindungsgemäss ist das Lager axial zwischen Bremsfläche und einem an der Welle befestigten Geber, insbesondere Dauermagnet, angeordnet. Von Vorteil ist dabei, dass der Geber mechanisch stabilisiert ist und die erzeugten Wärmeströme ableitbar sind über den Spulenkörper.

Bei einer vorteilhaften Ausgestaltung ist der Geber schraubverbunden mit der Welle, insbesondere im Kopf einer Schraube angeordnet und die Schraube in die Stirnseite der Welle eingeschraubt. Die Schraube und/oder die Welle besteht vorzugsweise aus einem unmagnetischen Werkstoff. Von Vorteil ist dabei, dass eine möglichst einfache und schnelle Montage ermöglicht ist. Außerdem ist der Abstand durch die geringen Toleranzketten genau definiert und durch die etablierten Fertigungsverfahren prozesssicher erreichbar

Erfindungsgemäss ist eine mit dem Geber in Wirkverbindung stehende, den Geber detektierende Sensoranordnung mit dem Spulenkörper schraubverbunden, insbesondere wobei der Geber axial zwischen der Sensoranordnung und dem Lager angeordnet ist. Von Vorteil ist dabei, dass die Sensoranordnung auf einer Leiterplatte anordenbar ist, auf der auch eine elektronische Schaltung zum Weiterverarbeiten und/oder Auswerten der Sensorsignale angeordnet ist. Somit ist die Leiterplatte schraubverbindbar, beispielsweise über Gewindebolzen mit Abstandshülsen oder dergleichen, mit dem Spulenkörper. Hierzu weist der Spulenkörper entsprechende Gewindebohrungen auf.

Bei einer vorteilhaften Ausgestaltung ist der von der Bremsfläche radial überdeckte Bereich radial außerhalb des von der Bremsspule überdeckten radialen Bereichs angeordnet, insbesondere zur Wärmeabfuhr. Von Vorteil ist dabei, dass beide Wärmequellen voneinander radial beabstandet sind. Somit ist eine verbesserte Entwärmung ermöglicht. Insbesondere ist die Wärme des Bremslagerschildes direkt nach außen vom Spulenkörper ans Gehäuse abführbar. Infolge der radialen Beabstandung ist auch die Stabilität verbessert, da die abgeleitete Bremskraft, insbesondere das abgeleitete Bremsmoment, ebenfalls auf kurzem Weg nach außen ans Gehäuse ableitbar sind.

Weitere Vorteile ergeben sich aus den Unteransprüchen.

Die Erfindung wird nun anhand von Abbildungen näher erläutert:
In der Figur 1 ist ein erstes erfindungsgemäßes Ausführungsbeispiel abstrakt dargestellt, wobei das B-seitige Lager 9 als Festlager ausgeführt ist und mit seinem Außenring im Magnetkörper 8 gehalten ist.

In der Figur 2 ist ein zweites erfindungsgemäßes Ausführungsbeispiel abstrakt dargestellt, wobei das B-seitige Lager 22 als Loslager ausgeführt ist und mit seinem Außenring im Magnetkörper 8 gehalten ist.

In der Figur 3 ist ein detaillierteres Ausführungsbeispiel dargestellt.

In der Figur 4 ist das erste Ausführungsbeispiel als ein detaillierteres Ausführungsbeispiel dargestellt.

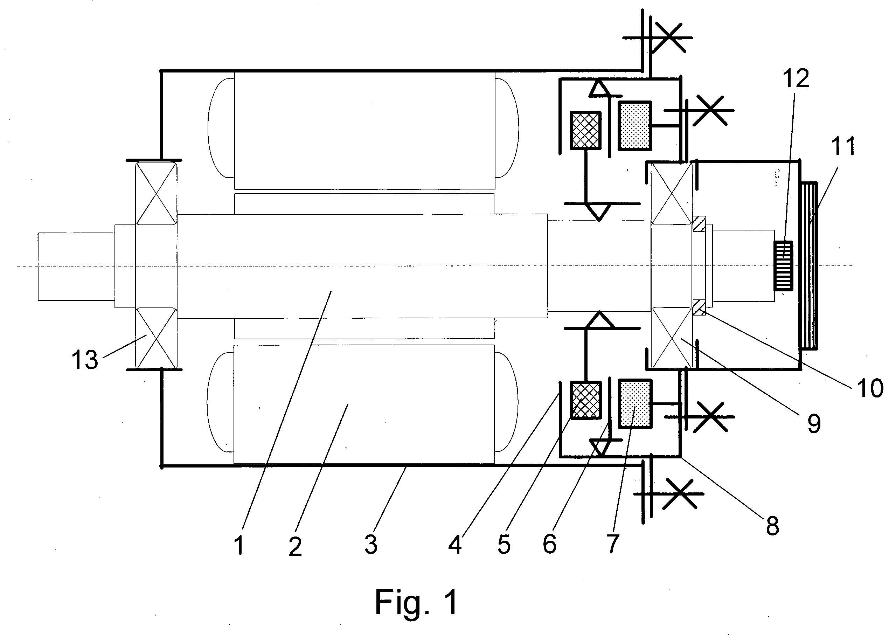

Dabei ist gemäß Figur 1 die Rotorwelle 1 des Elektromotors über ein abtriebsseitiges Lager 13 im Gehäuse 3 des Motors gelagert, wobei das Lager 13 als Loslager ausgeführt ist, und über ein B-seitig angeordnetes Lager 9 im Magnetkörper 8, welcher an seiner Außenseite, also an seinem größten Radialdurchmesser, mit dem Gehäuse 3 verbunden ist.

Im Gehäuse 3 sind auch die Statorwicklungen 2 angeordnet.

Die Rotorwelle trägt bei Ausführung als Asynchronmotor einen Kurzschlusskäfig und bei Ausführung als Synchronmotor einen Dauermagnetanordnung oder eine fremderregte Spulenanordnung. Somit ist die Rotorwelle in Drehbewegung versetzbar durch ein von den Statorwicklungen 2 erzeugtes Drehfeld.

B-seitig ist im Motor eine Bremse angeordnet und ein Drehwinkelsensor.

Hierzu ist auf der Rotorwelle 1 ein Reibbelagträger 5 axial verschiebbar, aber in Umfangsrichtung formschlüssig verbunden angeordnet. Vorzugsweise umfasst der Reibbelagträger hierzu eine Innenverzahnung, die mit einer entsprechenden Außenverzahnung der Rotorwelle 1 im Eingriff steht. Der Reibbelagträger ist an seinen beiden axialen Stirnseiten mit einem Reibbelag versehen. Der Reibbelagträger 5 ist axial zwischen einer ferromagnetischen Ankerscheibe 6, insbesondere einer aus Stahl ausgeführten Ankerscheibe, und einem Bremsschild 4, also Reibscheibe, angeordnet.

Die Ankerscheibe 6 ist drehfest zum Gehäuse 3 angeordnet, wobei sie aber in axialer Richtung verschiebbar angeordnet ist. Hierzu sind Führungsteile fest mit dem Gehäuse 3 verbunden, die in Ausnehmungen der Ankerscheibe 6 hineinragen.

Die Bremsspule 7 ist im Magnetkörper der Bremsspule angeordnet, insbesondere in einer Ausnehmung des Materials des Spulenkörpers angeordnet.

Der Spulenkörper ist aus einem ferromagnetischen Material und weist auch einen Lagersitz für das Lager 9 auf, das als B-seitiges Festlager ausgeführt ist. Hierzu ist der Außenring des Lagers 9 an einem Absatz des Spulenkörpers festgelegt. Der Innenring des Lagers 9 ist mittels eines Sicherungsrings 10 axial festgelegt.

Am axialen Endbereich der Welle, insbesondere an der Stirnseite der Welle 1, ist als Geber 12 für ein Winkelsensorsystem ein Dauermagnet angeordnet. Vorzugsweise ist der Dauermagnet in radialer Richtung magnetisiert. Der Geber 12 ist in Wirkverbindung mit einer stationären Sensoranordnung 11, insbesondere elektronische Leiterplatte mit Sensor. Hierzu wird vorzugsweise ein Hallsensorelement beziehungsweise ein Kreuzhallsensorelement in der Sensoranordnung vorgesehen, um eine Bestimmung der Winkellage der Welle 1 ausführbar zu machen.

Die Welle 1 ist über ein weiteres Lager 13 A-seitig gelagert, das als Loslager ausgeführt ist. Somit sind thermisch bedingte Längenveränderungen kompensierbar mittels dieses Loslagers.

Vorteiligerweise ist die Sensoranordnung an der Festlagerseite der Welle 1 angeordnet, so dass die Entfernung zwischen Geber 12 und Sensoranordnung 11 nur unwesentlich verändert wird durch thermisch bedingte Längenveränderungen. Dadurch ist eine hohe Genauigkeit der Detektion der Winkellage gewährleistbar - auch bei Temperaturänderungen. Der Spulenkörper 8 ist aus einem Werkstoff mit hoher Permeabilität und Remanenz gefertigt und weist außerdem eine geringe Koerzitivfeldstärke auf. Durch umformendes Bearbeiten, wie Schmieden - auch bei gleichzeitigem Erhitzen -, ist der Spulenkörper geformt, wodurch er eine homogene Metallstruktur aufweist und die vorteilhaften magnetischen Eigenschaften vorhanden sind. Vorzugsweise ist der Werkstoff ein Stahl. Der Siliziumanteil ist hierbei kleiner als 0,6%, insbesondere kleiner als 0,4 % und der Kohlenstoffanteil ist kleiner als 0,5%, insbesondere 0,15 % Bei Unterschreiten der beiden jeweils kleineren vorteilhaften Grenzwerte haben sich besonders gute magnetische Eigenschaften und eine besonders einfache Herstellung herausgestellt.

Der Spulenkörper dient also nicht nur zur Bündelung der von der Bremsspule erzeugten Feldlinien und somit Verstärkung der Feldstärke sondern auch zur Wärmeabfuhr der in ihm vorgesehenen Bremsspule, die vorzugsweise mit unipolarer Spannung, insbesondere Gleichspannung betrieben wird. Denn deren Ohmsche Wärme muss durch den Spulenkörper abgeführt werden. Außerdem wird auch ein wesentlicher Anteil der im B-seitigen, also im zur Sensoranordnung zugewandten Lager erzeugten Wärme durch den Spulenkörper geleitet und von diesem ans Gehäuse 3 und von dort an die Umgebung abgeführt.

Außerdem weist der Spulenkörper eine hohe Festigkeit auf. Somit sind in ihm die Federn zum axialen Andrücken der Ankerscheibe angeordnet und abstützbar.

Außerdem ist das B-seitige Lager im Lagersitz des Spulenkörpers vorgesehen, so dass auch die vom Lager abgeleiteten Kräfte vom Spulenkörper an das Gehäuse 3 weiterleitbar sind, insbesondere ohne dass der Spulenkörper sich wesentlich verformt.

Der Spulenkörper ist auch als Magnetkörper bezeichenbar.

Die Bremsspulenwicklung ist vergossen im Spulenkörper angeordnet. Hierbei ist in einer ersten Ausführung eine Ringnut im Spulenkörper vorgesehen, in welcher die Bremsspule, insbesondere als Ringwicklung, vorgesehen ist und mit Vergussmasse vergossen ist. In einer weiteren Ausführungsform ist die Bremsspule in einem ringförmigen ausgenommenen Bereich des Spulenkörpers angeordnet, so dass die Bremsspule wiederum als Ringwicklung angeordnet ist.

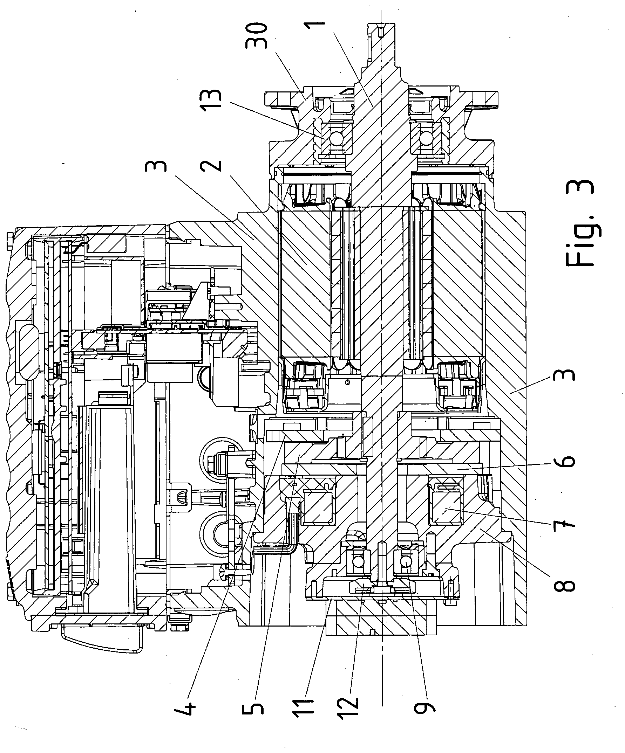

In Figur 3 ist ein Ausführungsbeispiel gezeigt, das konkret dargestellt ist und ein ähnliches Konzept wie Figur 1 zeigt. Im Unterschied zur Figur 1 ist allerdings ein Lagerflanschteil 30 mit dem Gehäuse 3 schraubverbunden, so dass das A-seitige Lager 13 in diesem Lagerflanschteil 30 aufgenommen ist. Auf diese Weise ist auch eine einfachere Montage erreichbar. Außerdem ist mittels des Lagerflanschteils an dessen Abtriebsseite eine mechanische Schnittstelle zum Anschließen einer vom Motor angetriebenen Vorrichtung. Für das Anschließen alternativer Vorrichtungen mit entsprechend alternativer Schnittstelle sind im Lager nur entsprechend ausgeführte Lagerflanschteile vorrätig zu halten, die abtriebsseitig die gewünschte Schnittstelle bereit stellen. Somit ist eine hohe Varianz von Motoren, die also abtriebsseitig verschiedene Schnittstellen bereit stellen durch eine geringe Anzahl von Komponenten eines Baukastens herstellbar.

In Figur 3 überdeckt zwar der radiale Bereich der Bremsfläche den von der Bremsspule beanspruchten radialen Bereich, jedoch wird der wesentliche Teil der Bremskraft beziehungswiese des Bremsmoments außerhalb des radialen Bereichs der Bremsspule erzeugt. Bei einer alternativen Ausführung ist die gesamte Bremsfläche auf einem höheren Radialabstand als die Bremsspule angeordnet, insbesondere also radial weiter außen als die Bremsspule. Axial sind Bremsspule und Bremsfläche allerdings beabstandet, so dass diese beiden Wärmequellen die von ihnen erzeugte Wärme beide in das zwischengeordnete Material des Spulenkörpers ableiten können.

Der Spulenkörper 8 ist schraubverbunden mit dem Gehäuse 3.

Im Unterschied zur Figur 1 ist in Figur 3 der Reibbelagträger 5 mit der Rotorwelle 1 formschlüssig durch eine Passfeder und durch eine verzahnte Verbindung anstelle der bei Figur 1 beschriebenen, nur verzahnten Verbindung verbunden, insbesondere durch eine in axialer Richtung sich erstreckende.

Die elektronische Leiterplatte der Sensoranordnung ist schraubverbunden, insbesondere über Abstandshalter, mit dem Spulenkörper 8. Somit führt der Spulenkörper auch tragende Funktion für die Sensoranordnung 11 aus. Der Sensor ist vorzugsweise ein Kreuzhallsensor und ist mittig zur Rotorwelle 1 positioniert.

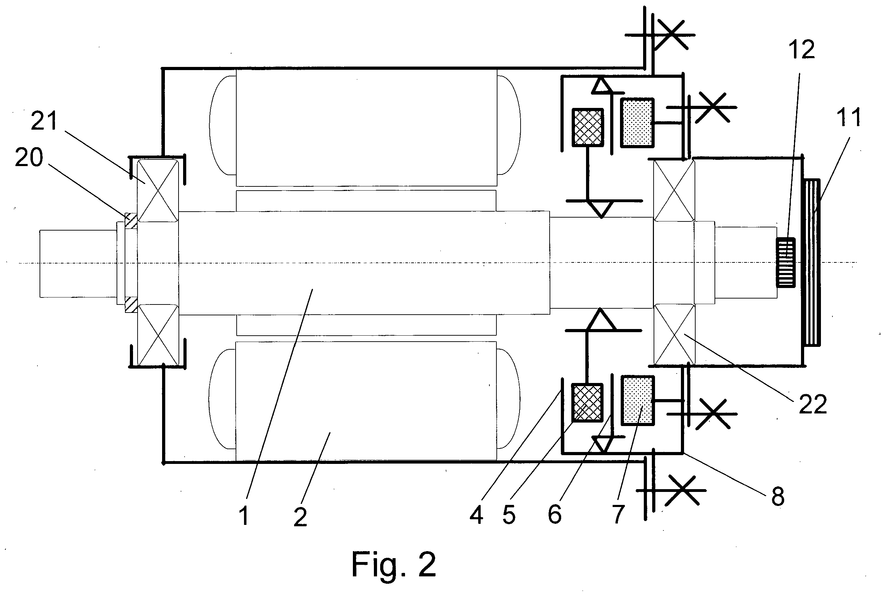

In Figur 2 ist ein weiteres erfindungsgemäßes Ausführungsbeispiel gezeigt, bei dem im Unterschied zur Figur 1 Loslager und Festlager vertauscht sind. Hierbei sichert der Sicherungsring 20 nun das A-Seitig angeordnete, als Festlager ausgeführte Lager 21. Das B-seitig angeordnete Lager 22 ist als Loslager ausgeführt.

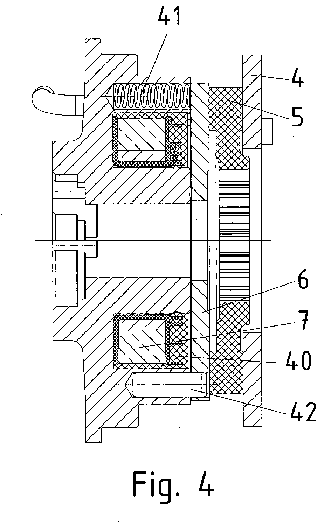

In Figur 4 ist für ein weiteres erfindungsgemäßes Ausführungsbeispiel die Bremse vergrößert dargestellt. Dabei ist klar dargestellt, dass die Bremsspule 7 in einer Ringnut des Spulenkörpers 8 angeordnet ist und mit Vergussmasse 40 vergossen ist. Die Führungen 42 sind in dem Spulenkörper 8 befestigt und dienen zum Führen der Ankerscheibe bei Bewegung in axialer Richtung. Die Druckfedern 41 drücken auf die Ankerscheibe in axialer Richtung, insbesondere in die von der Bremsspule abgewandte axiale Richtung. Bei Bestromung der Bremsspule 7 wird die ferromagnetische Ankerscheibe angezogen und in Richtung auf die Bremsspule axial bewegt, wobei die Federkraft von der elektromagnetischen Kraft überwunden wird. Die Reibungswärme beim Abbremsen wird über den Spulenkörper 8 an das Gehäuse 3 abgeführt.

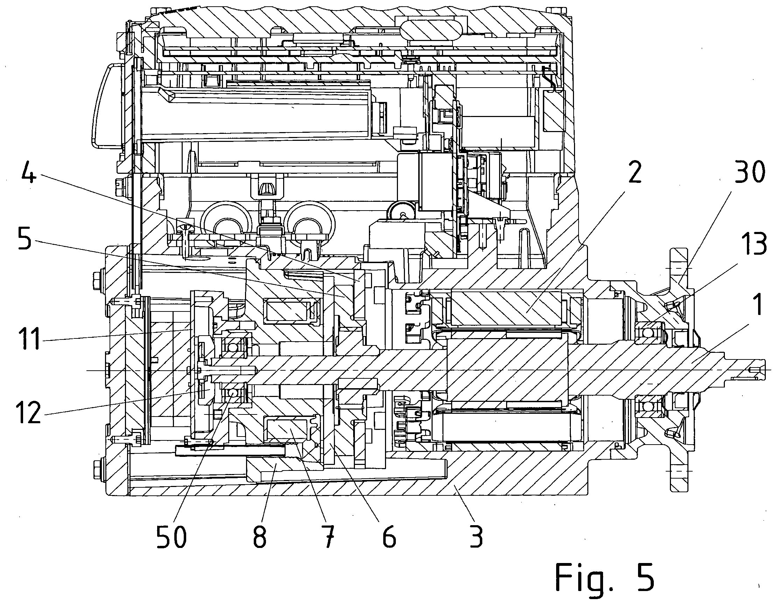

In der Figur 5 ist ein weiteres Ausführungsbeispiel gezeigt. Wesentlicher Unterschied zur Figur 3 ist dabei, dass das B-seitige Lager 50 der Rotorwelle 1 als Festlager ausgeführt ist.

### Bezugszeichenliste

1 Rotorwelle
2 Statorwicklungen
3 Gehäuse
4 Bremsschild (Reibscheibe)
5 Reibbelagträger
6 Ankerscheibe
7 Bremsspule
8 Spulenkörper, insbesondere Kern
9 Lager, insbesondere Festlager, B-seitig
10 Sicherungselement, insbesondere Sicherungsring
11 Sensoranordnung, insbesondere elektronische Leiterplatte mit Sensor
12 Geber, insbesondere Dauermagnet
13 Lager, insbesondere Loslager, A-seitig
20 Sicherungselement, insbesondere Sicherungsring
21 Lager, insbesondere Festlager, A-seitig
22 Lager, insbesondere Loslager, B-seitig
30 Lagerflanschteil
40 Vergussmasse
41 Druckfedern
42 Führung
50 Lager, insbesondere Festlager, B-seitig

## Patentansprüche

1. Elektromotor, aufweisend eine Rotorwelle (1) eine elektromagnetisch betätigbare Bremse und ein Gehäuse (3), wobei die Bremse eine Bremsspule (7) mit Spulenkörper (8) aufweist, wobei die Rotorwelle über zumindest ein Lager (9,22,50) das als Loslager, als angestelltes Lager oder als Festlager, ausgeführt ist, gelagert ist,
**wobei** das Lager an einem im Spulenkörper angeordneten Lagersitz aufgenommen ist, **wobei** der Außenring des Lagers im Spulenkörper radial festgelegt ist,
**und** der Spulenkörper mit dem Gehäuse verbunden ist, insbesondere an dessen Innenseite, **wobei** der Spulenkörper mit dem Gehäuse schraubverbunden ist,
**wobei das Lager axial zwischen Bremsfläche und einem an der Welle befestigten** Geber (12), **insbesondere Dauermagnet, angeordnet ist,** wobei die Bremse einen mit der Rotorwelle (1) axial verschiebbar, aber in Umfangsrichtung formschlüssig verbundenen Reibbelagträger (5) aufweist, der von einer mit dem Gehäuse (3) oder Spulenkörper (8) drehfest verbundenen, axial verschiebbar angeordneten Ankerscheibe (6), insbesondere aus Stahl, gegen die Bremsfläche andrückbar ist mittels einer von Federelementen (41) erzeugten Federkraft, insbesondere nach Abschalten des Stromes in der Bremsspulenwicklung und somit Reduzieren beziehungsweise Versiegens der von der Bremsspule (7) erzeugten, gegen die Federkraft wirkenden magnetischen Kraft, **dadurch gekennzeichnet, dass die Bremsspule** (7) **in einer Ausnehmung des Spulenkörpers** (8) **vergossen vorgesehen ist,** wobei die Federelemente (41) **in Ausnehmungen des Spulenkörpers** (8) **angeordnet sind, wobei die Federelemente** (41) auf gleichem Radialabstand angeordnet sind und in Umfangsrichtung voneinander beabstandet sind, insbesondere regelmäßig,
wobei eine mit dem Geber (12) in Wirkverbindung stehende, den Geber detektierende Sensoranordnung (11) **mit** dem Spulenkörper (8) schraubverbunden ist, insbesondere wobei der Geber (12) axial zwischen der Sensoranordnung (11) **und dem Lager** (9,22,50) **angeordnet ist.**

2. Elektromotor nach Anspruch 1,
**dadurch gekennzeichnet, dass**
der Spulenkörper (8) aus einem ferromagnetischen Material gefertigt ist.

3. Elektromotor nach mindestens einem der vorangegangenen Ansprüche,
**dadurch gekennzeichnet, dass**
der Spulenkörper (8) aus einem Stahl, insbesondere aus einem niedrig legierten Qualitätsstahl, insbesondere aus C10 oder C15, gefertigt ist,
insbesondere mit einem Anteil von weniger als 0,6% Silizium, insbesondere weniger als 0,4 % Silizium,
und/oder mit einem Kohlenstoffanteil von weniger als 0,5%, insbesondere weniger als 0,15 %.

4. Elektromotor nach mindestens einem der vorangegangenen Ansprüche,
**dadurch gekennzeichnet, dass**
die Bremsspule (7) axial zwischen dem Lager (9,22,50) und einer Bremsfläche angeordnet ist,
insbesondere der Spulenkörper eine Ankerfläche aufweist.

5. Elektromotor nach mindestens einem der vorangegangenen Ansprüche,
**dadurch gekennzeichnet, dass**
bei Ausführung des Lagers als Festlager (9,50)
- der Außenring des Lagers an einem Absatz des Spulenkörpers und/oder an einem Sicherungselement, insbesondere Sicherungsring, oder an einem mit dem Spulenkörper verbundenen Flanschteil axial begrenzt ist und/oder
- der Innenring des Lagers an seiner ersten axialen Seite an einem Absatz der Welle axial festgelegt ist und an seiner anderen axialen Seite mittels eines auf der Welle befestigten Sicherungselements festgelegt ist.

6. Elektromotor nach einem der Ansprüche 1 bis 4
**dadurch gekennzeichnet, dass**
**bei Ausführung des Lagers als Loslager** (22)
- **der Außenring des Lagers verschiebbar ist und über ein Federelement vorgespannt ist und**
- **der Innenring des Lagers auf der Welle fest, also axial unverschiebbar, angeordnet ist.**

7. Elektromotor nach mindestens einem der vorangegangenen Ansprüche,
**dadurch gekennzeichnet, dass**
der Geber (12) schraubverbunden ist mit der Welle (1), insbesondere im Kopf einer nicht-magnetischen Schraube angeordnet ist und die Schraube in die Stirnseite der Welle eingeschraubt ist.

8. Elektromotor nach mindestens einem der vorangegangenen Ansprüche,
**dadurch gekennzeichnet, dass**
der von der Bremsfläche radial überdeckte Bereich radial außerhalb des von der Bremsspule (7) überdeckten radialen Bereichs angeordnet ist, insbesondere zur Wärmeabfuhr.

## Claims

1. Electric motor, having a rotor shaft (1), an electromagnetically operable brake, and a housing (3),
wherein the brake has a brake coil (7) with a coil body (8), wherein the rotor shaft is mounted via at least one bearing (9, 22, 50), which is configured as a floating bearing, as a spring-loaded bearing or as a fixed bearing,
wherein the bearing is accommodated on a bearing seat arranged in the coil body,
wherein the outer race of the bearing is radially fixed in the coil body,
and the coil body is connected to the housing, in particular on the inner side thereof,
wherein the coil body is screw-connected to the housing, wherein the bearing is arranged axially between the brake surface and an encoder (12), in particular a permanent magnet, which is fastened to the shaft,
wherein the brake has a friction lining carrier (5) which is connected to the rotor shaft (1) in an axially displaceable manner but with a form fit in the circumferential direction and which can be pressed by an armature disc (6), in particular made of steel, which is connected to the housing (3) or coil body (8) in a rotationally fixed manner and is arranged in an axially displaceable manner, against the brake surface by means of a spring force that is generated by spring elements (41), in particular after the current in the brake coil winding has been switched off and thus the magnetic force generated by the brake coil (7) and countering the spring force has been reduced or has stopped,
**characterized in that**
the brake coil (7) is provided in a manner cast into a recess of the coil body (8),
wherein the spring elements (41) are arranged in recesses of the coil body (8),
wherein the spring elements (41) are arranged at an equal radial spacing and are spaced apart from one another in the circumferential direction, in particular at regular intervals, wherein a sensor arrangement (11) which is operatively connected to the encoder (12) and which detects the encoder is screw-connected to the coil body (8),
in particular wherein the encoder (12) is arranged axially between the sensor arrangement (11) and the bearing (9, 22, 50) .

2. Electric motor according to claim 1,
**characterized in that**
the coil body (8) is made of a ferromagnetic material.

3. Electric motor according to at least one of the preceding claims,
**characterized in that**
the coil body (8) is made of a steel, in particular of a low-alloy quality steel, in particular of C10 or C15,
in particular having a proportion of less than 0.6% silicon, in particular less than 0.4% silicon,
and/or having a carbon content of less than 0.5%, in particular less than 0.15%.

4. Electric motor according to at least one of the preceding claims,
**characterized in that**
the brake coil (7) is arranged axially between the bearing (9, 22, 50) and a brake surface,
in particular the coil body has an armature surface.

5. Electric motor according to at least one of the preceding claims,
**characterized in that**
if the bearing is configured as a fixed bearing (9, 50)
- the outer race of the bearing is bounded axially at a shoulder of the coil body and/or at a securing element, in particular a securing ring, or at a flange part connected to the coil body, and/or
- the inner race of the bearing is fixed axially on its first axial side against a shoulder of the shaft and is fixed on its other axial side by means of a securing element fastened to the shaft.

6. Electric motor according to one of claims 1 to 4,
**characterized in that**
if the bearing is configured as a floating bearing (22)
- the outer race of the bearing is displaceable and is biased by way of a spring element, and
- the inner race of the bearing is arranged on the shaft in a fixed manner, that is to say in an axially immovable manner.

7. Electric motor according to at least one of the preceding claims,
**characterized in that**
the encoder (12) is screw-connected to the shaft (1), in particular is arranged in the head of a non-magnetic screw and the screw is screwed into the end face of the shaft.

8. Electric motor according to at least one of the preceding claims,
**characterized in that**
the region radially covered by the brake surface is arranged radially outside of the radial region covered by the brake coil (7), in particular for heat dissipation.

## Revendications

1. Moteur électrique comprenant un arbre rotorique (1),
un frein à actionnement électromagnétique
et un carter (3),
le frein comportant une bobine (7) munie d'un corps (8),
l'arbre rotorique étant monté par l'intermédiaire d'au moins un palier (9, 22, 50) réalisé sous la forme d'un palier flottant, d'un palier à précharge réglable ou d'un palier fixe, ledit palier étant mis en place sur un siège situé dans le corps de la bobine,
la bague extérieure dudit palier étant bloquée radialement à demeure dans ledit corps de la bobine,
et ledit corps de la bobine étant relié au carter, en particulier à la face intérieure de celui-ci,
le corps de ladite bobine étant relié audit carter par vissage,
ledit palier étant interposé axialement entre une surface de freinage et un émetteur (12), notamment un aimant permanent fixé à l'arbre,
sachant que le frein est doté d'un support (5) de garnitures de freinage qui peut être déplacé axialement avec l'arbre rotorique (1), est toutefois relié par complémentarité de formes dans la direction périphérique et peut être pressé contre ladite surface de freinage par un disque d'induit (6), notamment en acier, agencé avec faculté de déplacement axial et relié, avec verrouillage rotatif, au carter (3) ou au corps (8) de la bobine, au moyen d'une force élastique engendrée par des éléments élastiques (41), en particulier après suppression du courant dans l'enroulement de la bobine du frein, et donc après réduction ou neutralisation respective de la force magnétique engendrée par ladite bobine (7) du frein, et agissant en opposition à la force élastique,
**caractérisé par le fait que**
la bobine (7) du frein est prévue, avec intégration par scellement, dans un évidement du corps (8) de la bobine,
les éléments élastiques (41) étant logés dans des évidements dudit corps (8) de la bobine, lesquels éléments élastiques (41) sont disposés avec espacement radial identique et mutuellement à distance dans la direction périphérique, en particulier de manière uniforme,
sachant qu'un ensemble capteur (11) en liaison opérante avec l'émetteur (12), et détectant ledit émetteur, est relié par vissage au corps (8) de la bobine,
sachant notamment que ledit émetteur (12) est interposé, dans le sens axial, entre ledit ensemble capteur (11) et le palier (9, 22, 50).

2. Moteur électrique selon la revendication 1,
**caractérisé par le fait que**
le corps (8) de la bobine est fabriqué en un matériau ferromagnétique.

3. Moteur électrique selon au moins l'une des revendications précédentes,
**caractérisé par le fait que**
le corps (8) de la bobine est fabriqué en un acier, notamment en un acier de qualité faiblement allié, notamment en C10 ou en C15
renfermant, en particulier, une proportion inférieure à 0,6 % de silicium, notamment inférieure à 0,4 % de silicium,
et/ou une proportion de carbone inférieure à 0,5 %, notamment inférieure à 0,15 %.

4. Moteur électrique selon au moins l'une des revendications précédentes,
**caractérisé par le fait que**
la bobine (7) du frein est interposée, dans le sens axial, entre le palier (9, 22, 50) et une surface de freinage,
le corps de ladite bobine étant notamment pourvu d'une surface d'induit.

5. Moteur électrique selon au moins l'une des revendications précédentes,
**caractérisé par le fait que**,
lorsque le palier est réalisé sous la forme d'un palier fixe (9, 50),
- la bague extérieure dudit palier est délimitée axialement au niveau d'un épaulement du corps de la bobine et/ou d'un élément d'arrêt, notamment d'une bague d'arrêt, voire d'une partie de bridage reliée audit corps de la bobine, et/ou
- la bague intérieure dudit palier est bloquée axialement à demeure sur un épaulement de l'arbre, au niveau de sa première face axiale, et est bloquée à demeure, au niveau de son autre face axiale, au moyen d'un élément d'arrêt fixé sur ledit arbre.

6. Moteur électrique selon l'une des revendications 1 à 4,
**caractérisé par le fait que**,
lorsque le palier est réalisé sous la forme d'un palier flottant (22),
- la bague extérieure dudit palier est déplaçable, et est précontrainte par l'intermédiaire d'un élément élastique, et
- la bague intérieure dudit palier occupe une position fixe sur l'arbre, c'est-à-dire ne peut pas être déplacée axialement.

7. Moteur électrique selon au moins l'une des revendications précédentes,
**caractérisé par le fait que**
l'émetteur (12) est relié à l'arbre (1) par vissage et est disposé, en particulier, dans la tête d'une vis non magnétique, laquelle vis est vissée dans la face extrême dudit arbre.

8. Moteur électrique selon au moins l'une des revendications précédentes,
**caractérisé par le fait que**
la région, recouverte dans le sens radial par la surface de freinage, est située radialement à l'extérieur de la région radiale recouverte par la bobine (7) du frein, notamment en vue de la dissipation de chaleur.
